# EUROPEAN PATENT APPLICATION

(11) **EP 1 249 398 A1**
(43) Date of publication of application: **16.10.2002**
(21) Application number: 02076377.7
(22) Date of filing: 08.04.2002
(51) Int. Cl.: B65B 23/08, B65G 47/91

(54) **Suction cup device**

(30) Priority: 09.04.2001 EP 01201273
(71) Applicant: FPS Food Processing Systems B.V., 2631 RE Nootdorp (NL)
(72) Inventor: Doornekamp, Martin, 3863 DZ Nijkerk (NL)
(74) Representative: Prins, Adrianus Willem

(57) **Abstract**

The present invention relates to a suction cup device for engaging, displacing and releasing objects of substantially unequal sizes, such as food products, in particular eggs or fruit, comprising
- a bellows (1), consisting of elastic material,
- an air suction duct (20),
- a frame (30), connected to the at least one air suction duct (20), with supply and discharge means for air, and connected to displacement means which, during engagement, position the frame over the objects such that each mouth-shaped opening (10) in its entirety is positioned onto such an object.
Further, locking means (40) serve for locking the air suction duct after engagement or placement of the objects, and for releasing the air suction duct (20) upon release of the objects.

## Description

The present invention relates to a suction cup device for engaging, displacing and releasing objects of substantially unequal size, such as food products, in particular eggs or fruit, comprising:
- a bellows, consisting of elastic material,
- an air suction duct, the bellows being provided at the one end with a collar with which the bellows is connected to the air suction duct, and, at the side remote therefrom, with a mouth-shaped opening for, successively, approaching, applying suction and thus engaging, displacing, placing and finally releasing such an object in an approach or release direction, respectively, while the bellows, substantially in the approach direction or placement direction, can be compressed over at least a small distance, and
- a frame, connected to the at least one air suction duct, with supply and discharge means for air, and connected to displacement means, which, at engagement, position the frame over the objects such that each mouth-shaped opening in its entirety is arranged on such an object.

Such a device is known from, for instance, US patent 3,656,794. Herein, it is described how, with a bellows of rubber or another suitable resilient material by vacuum suction, after placement on an egg, such objects can be taken up and displaced. The height adjustment of such a bellows system is such that both small and large eggs can be taken up.

In US patent 3,542,412, a matrix-shaped construction of suction cups is shown with which large quantities of eggs, arranged in regular patterns, can be picked up and displaced. This construction comprises an assembly of air suction ducts to just as many suction cups and often allows the setting of different matrix-patterns. With devices of this sort, for instance large quantities of eggs are taken up from cardboard supply trays and are dropped between nest-forming hourglass-shaped rollers of a supply of an egg sorting apparatus.

Although in such systems picking up and releasing, for instance, eggs can be done smoothly, in particular at high speeds the pressing on the eggs and placement of the eggs will occur very abruptly. Especially upon release, this has been found to lead to an increase of the break percentage.

In NL 69375, a suction cup device is described with suction cups suitable for taking up eggs of unequal sizes. The construction of these suction cups is such that the entirety of the suction cup, comprising a dome and a flexible or elastic part, should be considered to be the above-mentioned bellows. This implies that when pressing the suction cup down onto an egg, the pressing force will always increase with increasing pressing. With appreciable differences in sizes of eggs, the risk of breaking will therefore be considerable.

To remedy the above-mentioned shortcoming, the suction cup device according to the present invention is characterized in that the air suction duct is movable relative to the frame in the direction of approach or placement, such that the air suction duct during engagement and release is only displaced in the direction opposite to the approach direction or placement direction if the bellows is compressed over the small distance mentioned.

In particular, the suction cup device is characterized in that the device further comprises locking means, which, after engagement or placement of the objects, lock the position of the air suction duct, and only unlock the position of the air suction duct after release of the objects.

With such a suction cup device, also at very high speeds which are customary in the current high capacity sorting machines, the eggs will be both engaged and released in a suitable manner without breaking.

In a further embodiment of the invention, the suction cup device is characterized in that at least a part of the air suction duct consists of an air suction pipe and in the approach or placement direction can be moved and is guided in a guiding duct, while the locking means consist of wedge clamping members.

In the following, the invention will be elucidated with reference to a drawing, wherein:
Fig. 1 schematically shows the situation during engagement and pick-up of objects according to the state of the art;
Fig. 2 schematically shows the situation during engagement and taking up of objects according to the present invention; and
Fig. 3 schematically represents locking means according to the invention.

In the different Figures, identical parts have identical reference numerals.

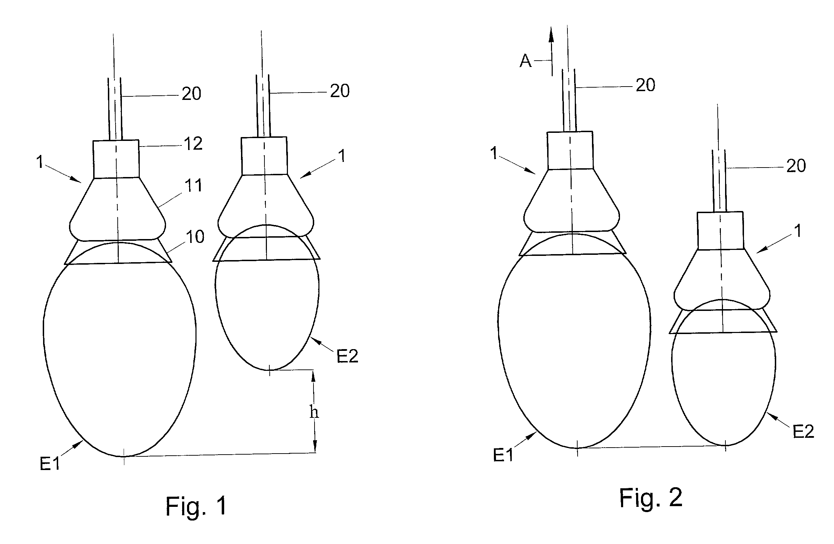

In Fig. 1, a large egg E1 and a small egg E2 are taken up by a suction cup device according to the state of the art. The situation is drawn in which the eggs are suspended from the suction cups after having been taken up from, for instance, a cardboard supply tray. A suction cup device consists of a bellows 1 with a mouth-shaped opening 10, a bell 11, and a collar 12, which, in its turn, is connected to an air suction duct 20. It will be clear to any skilled person that the bell 11 of the bellows, other than schematically indicated in the Figures, can have several curves.

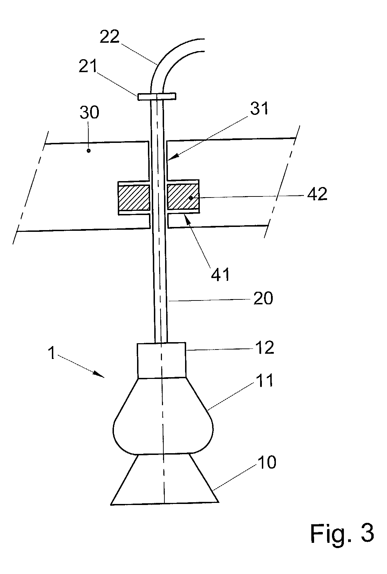

The taking up of the eggs takes place, after positioning of the suction cups on the eggs, by drawing a vacuum in the duct so that the eggs stick as it were to the opening 10, while the opening, which functions as a mouth-shaped part, will in general be slightly drawn into the bell 11. Release takes place by removing the vacuum after placement of the eggs, whereupon the opening 10 will return to the position of rest of the bellows as schematically shown in Fig. 3. This position of rest is the position in which in the suction cup device no reduced pressure or excess pressure will prevail.

A difference in height h is indicated for the difference in the vertical direction along which the eggs are positioned in, for instance, trays. In the extreme, this difference can be up to three cm.

According to the state of the art as described in more detail hereinabove, only the suction cups themselves can be compressed and spring outward but cannot be adjusted in height. More in detail, this means that during placement on a large egg E1, the bellows 1 has to be compressed further against the spring force of the bellows, while the compressive force may well be quite large and a crack may be formed in the eggshell. During release of the eggs, the situation may arise where the suction cup device does not come down far enough to place the smallest eggs with their bottom ends on an underground, and, upon removal of the vacuum from the bellows, they could fall and break.

In Fig. 2, the situation is represented in which, according to the invention, a large egg E1 and a small egg E2 are taken up. In for instance the vertical direction, the air suction ducts connected to the bellows will be displaced in the approach direction as soon as a particular spring force value of the bellows 1 is reached. This is, for instance, a situation wherein, at that moment, the spring force is as large as the clamping force which is to be exceeded by the air suction duct in opposite direction. This clamping force can for instance be a frictional force, in which situation it will then hold that a maximum frictional force is exceeded, while, simultaneously, the pushing force on the egg will remain the same due to the frictional force remaining the same. It will be clear to any skilled person that this clamping force can be brought about in many manners, for instance pneumatically, electromagnetically, or, also, by the friction mentioned with the aid of a wedge construction. In this situation mentioned, the bellows is compressed over at least a small distance as is represented in Fig. 2, whereupon, for taking up a relatively large egg E1, the bellows 1 is not further compressed but, conversely, the air suction duct is displaced in the direction A as shown. This direction is opposite to the approach or placement direction.

A similar situation occurs when the eggs are placed in a holder. When the frame is positioned somewhat too low and the eggs risk being pushed down, the locking of the air suction duct will be such that it is not locked in the placement direction, but upon the slightest pushing will be moved freely in the direction opposite thereto, so that, thus, no further pressure is exerted onto the eggs. Again, this placement direction is opposite to the direction A as drawn.

In Fig. 3, the situation is shown in which the bellows 1 is not in a condition of vacuum but in a condition of rest. In particular, it is shown how the air suction duct 20 is guided through the guiding duct 31. This guiding duct 31 forms part of a frame 30. In general, in such a frame, there will be several guiding ducts for forming a matrix-shaped construction. Additionally, locking means 40 have been represented. In the exemplary embodiment drawn, in a holder 41, a ring clamping member 42 is fitted whose clamping with respect to the air suction duct can be varied, for instance pneumatically or electromagnetically.

As already indicated for the above-mentioned two situations of engagement and release of objects, the locking or clamping will preferably be such as to be released only during the engagement or release mentioned, i.e. in the approach direction and in the placement direction.

It will be clear to any skilled person that the suction cup device according to the present invention is also suitable for moving fruits such as apples, pears, sweet peppers and the like.

Typically, engagement and release will proceed in vertical direction, but also other directions or even different directions for engagement and release are possible.

## Claims

1. A suction cup device for engaging, displacing and releasing objects of substantially unequal sizes, such as food products, in particular eggs or fruits, comprising:
- a bellows, consisting of elastic material,
- an air suction duct, the bellows being provided at one end with a collar with which a bellows is connected to the air suction duct, and, at the end remote therefrom, being provided with a mouth-shaped opening for successively, approaching, applying suction to and thereby gripping, displacing and placing and finally releasing such an object in an approach direction or release direction, respectively, the bellows being compressible over at least a small distance in substantially the approach direction or placement direction, and
- a frame, connected to the at least one air suction duct, with supply and discharge means for air, and connected to displacement means which, during engagement, position the frame over the objects such that each mouth-shaped opening in its entirety is positioned onto such an object, **characterized in that** the air suction duct is movable relative to the frame in the direction of approach or placement such, that the air suction duct during engagement and release is only moved in the direction opposite to the approach direction or placement direction if the bellows is compressed over said small distance.

2. A suction cup device according to claim 1, **characterized in that** the device further comprises locking means, which, after engagement or placement of the objects, lock the position of the air suction duct and only unlock the position of the air suction duct after release of the objects.

3. A suction cup device according to claim 1, **characterized in that** at least a part of the air suction duct consists of an air suction pipe and is movable and guided in a guiding duct in the approach or placement direction, while the locking means consist of a ring clamping member.
